# EUROPÄISCHE PATENTANMELDUNG

(11) **EP 3 258 744 A1**
(43) Veröffentlichungstag der Anmeldung: **20.12.2017**
(21) Anmeldenummer: 17159770.1
(22) Anmeldetag: 08.03.2017
(51) Int. Cl.: H05B 33/08

(54) **VERFAHREN ZUR STEUERUNG EINER AUGANGSLEISTUNG EINER ELEKTRISCHEN WECHSELSPANNUNG**

(30) Priorität: 14.06.2016 DE 102016210517
(71) Anmelder: Polzer, Rudolf, 90547 Stein (DE)
(72) Erfinder: Polzer, Rudolf, 90547 Stein (DE)
(74) Vertreter: Rau, Schneck & Hübner Patentanwälte Rechtsanwälte PartGmbB

(57) **Zusammenfassung**

Verfahren zur Steuerung einer Ausgangsleistung einer elektrischen Wechselspannung U umfassend die folgenden Schritte: Ausschalten eines durch die Wechselspannung U induzierten Stromflusses I, sobald ein Betrag der Wechselspannung U eine Ausschalt-Sollspannung 30 überschreitet, und Einschalten des Stromflusses I, sobald der Betrag der Wechselspannung U eine Einschalt-Sollspannung 32 unterschreitet. Die Ausschalt-Sollspannung 30 und die Einschalt-Sollspannung 32 sind positiv definiert und die Einschalt-Sollspannung 32 ist kleiner oder gleich der Ausschalt-Sollspannung 30. Das erfindungsgemäße Verfahren dient zum Dimmen eines LED-Leuchtmittels in einem Helligkeitsbereich von 0 % bis 100 % einer Maximalhelligkeit des LED-Leuchtmittels.

## Beschreibung

Die vorliegende Erfindung nimmt die Priorität der deutschen Patentanmeldung DE 10 2016 210 517.5 in Anspruch, deren Inhalt durch Bezugnahme hierin aufgenommen wird.

Die Erfindung betrifft ein Verfahren zur Steuerung einer Ausgangsleistung einer elektrischen Wechselspannung. Ferner betrifft die Erfindung einen Dimmer für eine elektrische Wechselspannung sowie eine Anordnung eines derartigen Dimmers mit einem mindestens ein LED-Element umfassenden Leuchtmittel.

Verfahren zur Steuerung einer Ausgangsleitung einer Wechselspannung finden insbesondere in Dimmern zur Steuerung der Helligkeit von Leuchtmitteln Verwendung. Bekannte Verfahren zur Steuerung der Ausgangsleistung sind zum Beispiel die Phasenanschnitt- und Phasenabschnittsteuerung. Bei der Phasenanschnittsteuerung wird ein Stromfluss verzögert nach dem Nulldurchgang der Wechselspannung eingeschaltet. Bei der Phasenabschnittsteuerung wird der Stromfluss schon vor dem Nulldurchgang der Wechselspannung abgeschaltet.

Derartige Verfahren haben bei kapazitiv gekoppelter Last den Nachteil, dass es bei den Einschaltvorgängen des Stromflusses zu großen Spannungsdifferenzen, insbesondere zu einem Vorzeichenwechsel der Spannung an den Kondensatoren kommt. Die großen Spannungsdifferenzen führen zu unerwünschten Strom-Impulsen, welche stören und Komponenten beschädigen können. Insbesondere sind diese Verfahren zum Dimmen von LED-Leuchtmitteln nicht geeignet, wenn die LED-Leuchtmittel über einen Gleichrichter und einen Koppelkondensator am Wechselspannungsnetz angeschlossen sind. Bisher sind solche LED-Leuchtmittel als nicht dimmbar bezeichnet.
Die Aufgabe der vorliegenden Erfindung ist daher, ein verbessertes Verfahren zum Steuern einer Ausgangsleistung für eine Wechselspannung anzugeben, bei dem derartige Stromimpulse vermieden werden, sodass mit diesem Verfahren LED-Leuchtmittel gedimmt werden können.

Diese Aufgabe wird erfindungsgemäß durch ein Verfahren mit den im Anspruch 1 angegebenen Merkmalen gelöst.

Das erfindungsgemäße Verfahren zeichnet sich dadurch aus, dass ein durch die angelegte Wechselspannung induzierter Stromfluss immer dann unterbrochen wird, wenn der Betrag der Wechselspannung eine Ausschalt-Sollspannung überschreitet. Das Wiedereinschalten des Stromflusses erfolgt, wenn der Betrag der Wechselspannung wieder unter eine Einschalt-Sollspannung fällt, wobei die Einschalt-Sollspannung kleiner oder gleich der Ausschalt-Sollspannung ist. Die Einschalt-Sollspannung sowie die Ausschalt-Sollspannung sind hierbei als positiv definiert. Durch eine derartige Schaltvorschrift ist gewährleistet, dass die Wechselspannung zwischen dem Aus- und Einschalten keinen Nulldurchgang durchläuft. Die Wechselspannung ändert das Vorzeichen zwischen dem Aus- und Einschalten also nicht. Spannungsdifferenzen an den angeschlossenen Kondensatoren zwischen den Schaltprozessen sind reduziert. Aus den Spannungsdifferenzen resultierende, unerwünschte Stromimpulse sind vermindert und insbesondere Beschädigungen sind vermieden.

Die angelegte Wechselspannung ist insbesondere eine Netzwechselspannung. Für eine periodische Wechselspannung mit definierter Frequenz ist der zeitliche Verlauf der Wechselspannung eindeutig bestimmt. Es besteht eine feste Relation zwischen dem Betrag der Wechselspannung und der Zeitachse. Den Ausschalt- und Einschalt-Sollspannungen können also sich periodisch wiederholende Zeitpunkte zugeordnet werden, an denen der Stromfluss eingeschaltet bzw. ausgeschaltet wird. Das Verfahren kann also auch durch die Vorgabe von Einschalt- und Ausschalt-Zeitpunkten definiert werden.

Die durch das Verfahren geschaltete Wechselspannung liegt als Eingangsspannung an mindestens einem LED-Leuchtmittel an. Der Strom wird also in der Zuleitung des LED-Leuchtmittels geschalten. Hierdurch wird ein Dimmen des LED-Leuchtmittels ermöglicht, ohne dass dieses ein integriertes Schaltnetzteil enthalten muss.

Eine Helligkeit des LED-Leuchtmittels ist in einem Helligkeitsbereich von 0 % bis 100 % einer maximalen Helligkeit des LED-Leuchtmittels steuerbar. Derzeit bekannte dimmbare LED-Leuchtmittel können in einem begrenzten Helligkeitsbereich gedimmt werden. Durch das erfindungsgemäße Verfahren kann der volle Helligkeitsbereich auch unterhalb von 10 % des LED-Leuchtmittels ausgeschöpft werden. Insbesondere ist es möglich, die Helligkeit des LED-Leuchtmittels in einem Helligkeitsbereich von 0 % bis 20 %, insbesondere von 0 % bis 15 % und insbesondere von 0 % bis 10 % zu steuern.

Für den Fall, dass die Ausgangsleistung zum Betrieb mehrerer LED-Leuchtmittel dient, können diese insbesondere parallel geschaltet sein. Zudem können die einzelnen LED-Leuchtmittel jeweils ein kapazitives Netzteil mit einem eingangsseitigen Koppelkondensator umfassen. Vorzugsweise ist die Einschalt-Sollspannung im Wesentlichen gleich der Ausschalt-Sollspannung. Hierunter ist zu verstehen, dass die Differenz aus Ausschalt-Sollspannung und Einschalt-Sollspannung kleiner ist als zweimal die Spannung, welche an einem Glättungskondensator des LED-Leuchtmittels abfällt. Beispielsweise kann vorgesehen sein, dass die Einschalt-Sollspannung mindestens 80 %, insbesondere mindestens 90 %, insbesondere mindestens 99 % der Ausschalt-Sollspannung beträgt. Hierdurch werden Spannungsunterschiede beim Ein- und Ausschalten des Stromflusses weiter reduziert. Störende Stromimpulse werden konsequent vermieden. Es ist insbesondere gewährleistet, dass die Differenz aus Ausschalt-Sollspannung und Einschalt-Sollspannung kleiner als eine an einem angeschlossenen Verbraucher abfallende Spannung ist.

Eine wesentliche Entsprechung der Einschalt-Sollspannung und der Ausschalt-Sollspannung hat weiterhin den Vorteil, dass der Stromfluss symmetrisch um den maximalen Betrag der angelegten Wechselspannung herum unterbrochen wird. Dies gewährleistet, dass der mittlere Stromfluss ungefähr proportional zu der Einschalt-Sollspannung bzw. zu der Ausschalt-Sollspannung ist. Die Ausgangsleistung kann daher über die Einschalt-Sollspannung und/oder die Ausschalt-Sollspannung quantifiziert werden.

Vorteilhafterweise sind die Einschalt-Sollspannung und/oder die Ausschalt-Sollspannung veränderlich festlegbar. Dies hat den Vorteil, dass die Ausgangsleistung einstellbar ist. Über eine veränderlich festlegbare Einschalt-Sollspannung und/oder Ausschalt-Sollspannung kann indirekt auch die Ausgangsleistung festgelegt werden.

Des Weiteren betrifft die Erfindung einen Dimmer für den Anschluss an eine elektrische Wechselspannung mit den Merkmalen des unabhängigen Anspruchs 4. Der erfindungsgemäße Dimmer eignet sich auch für Verbraucher, die nicht mit einer mittels Phasenanschnitt- oder Phasenabschnittsteuerung gesteuerten Spannung betrieben werden können.

Der erfindungsgemäße Dimmer umfasst ein Schaltelement zum Einschalten und Ausschalten eines durch die Wechselspannung induzierten Stromflusses. Des Weiteren ist ein Steuerelement vorgesehen, das mittels einer Steuerspannung das Schalten des Stromflusses im Einklang mit dem oben umrissenen Verfahren gewährleistet. Die Vorteile dieses Dimmers entsprechen denen des erfindungsgemäßen Verfahrens.

Vorzugsweise weist der Dimmer einen Gleichrichter für die angelegte Wechselspannung auf. Bei gleichgerichteter Spannung kann das Schaltelement als Transistor ausgeführt sein. Dies gewährleistet einen kostengünstigen und einfachen Aufbau des Dimmers.

Das Steuerelement kann ein Potentiometer enthalten. Mit dem Potentiometer können die Ausschalt-Sollspannung und die Einschalt-Sollspannung veränderlich eingestellt werden.

Außerdem betrifft die Erfindung eine Anordnung mit einem Dimmer und mindestens einem Leuchtmittel, das mindestens ein LED-Element aufweist. Die Vorteile einer derartigen Anordnung entsprechen denen des erfindungsgemäßen Verfahrens und/oder des Dimmers.

Ein Ausführungsbeispiel der Erfindung wird nachfolgend anhand der Zeichnungen näher erläutert. In dieser zeigen:
- Fig. 1: ein schematisches Schaltbild für eine Anordnung mit einem Dimmer und einem LED-Leuchtmittel, und
- Fig. 2: einen zeitlichen Verlauf einer Periode einer angelegten Wechselspannung sowie eines nach dem erfindungsgemäßen Verfahren geschalteten Stromflusses, wenn eine ohmsche Last angeschlossen ist.

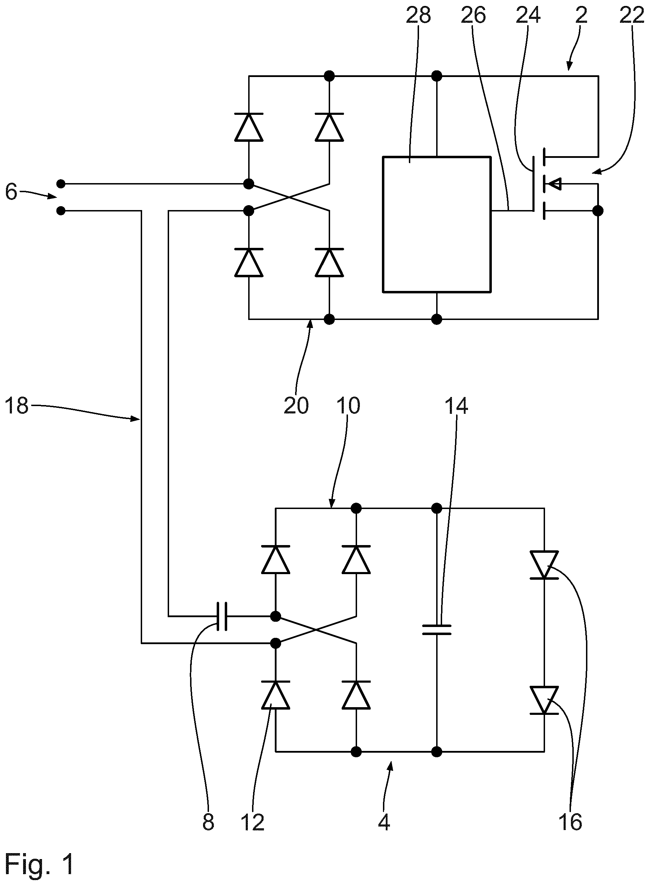

Fig. 1 zeigt ein Schaltbild einer Anordnung aus einem Dimmer 2 und einem LED-Leuchtmittel 4. Der Dimmer 2 und das LED-Leuchtmittel 4 sind an eine Spannungsquelle 6 angeschlossen. An der Spannungsquelle 6 liegt eine periodische Wechselspannung U, insbesondere eine Netzwechselspannung, an.

Das LED-Leuchtmittel 4 umfasst einen eingangsseitigen Koppelkondensator 8 zur Begrenzung des fließenden Stroms. An den Koppelkondensator 8 schließt sich ein Gleichrichter 10 aus vier Dioden 12 an. Der Gleichrichter 10 dient dazu, eine eingehende Wechselspannung in eine Gleichspannung zu wandeln. Zur Glättung des Gleichstroms ist dem Gleichrichter 10 ein Glättungskondensator 14 nachgeschaltet. Es sind zwei in Reihe geschaltete LED-Elemente 16 zur Umwandlung des Gleichstroms in Licht dargestellt. Alternativ kann das LED-Leuchtmittel 4 auch ein oder mehr als zwei LED-Elemente 16 umfassen.

Derartige LED-Leuchtmittel 4 sind bekannt. Sie haben den Nachteil, dass eine von den LED-Elementen 16 abgestrahlte Helligkeit nicht mittels herkömmlicher Dimmer dimmbar ist. Darüber hinaus kann ein störungsfreier Betrieb mit herkömmlichen Dimmern nicht gewährleistet werden. Der Grund hierfür ist, dass die Spannungssprünge bei herkömmlichen Dimmern störende Strom-Impulse an den Kondensatoren 8 und 14 hervorrufen. Diese Strom-Impulse verursachen störende Geräusche und können Komponenten des LED-Leuchtmittels oder des herkömmlichen Dimmers beschädigen.

In der hier gezeigten Anordnung ist das LED-Leuchtmittel 4 über eine Anschlussleitung 18 an dem Dimmer 2 und der Spannungsquelle 6 angeschlossen. Der Dimmer 2 weist einen eingangsseitigen Gleichrichter 20 auf, welcher dem Gleichrichter 10 des LED-Leuchtmittels 4 in Aufbau und Funktion entspricht. Der Gleichrichter 20 ist an ein Schaltelement 22 angeschlossen, das zum Ein- oder Ausschalten des Stroms dient.

Im vorliegenden Ausführungsbeispiel handelt es sich bei dem Schaltelement 22 um einen Transistor, insbesondere um einen normalsperrenden Metall-Oxid-Halbleiter-Feldeffekttransistor (MOSFET). Dies bedeutet, dass ohne Steuerspannung der MOSFET 22 den Stromfluss durch den Dimmer 2 sperrt. Um einen Stromfluss zu ermöglichen, ist an einem Gate 24 des MOSFETs 22 ein Steuerausgang 26 eines Steuerelements 28 angeschlossen. Das Steuerelement 28 kann die über dem MOSFET 22 abfallende Spannung zur eigenen Stromversorgung nutzen. Die über dem MOSFET 22 abfallende Spannung ist proportional zum Betrag der Wechselspannung U, wenn der Transistor ausgeschaltet ist und an der Last keine Spannung anliegt. Das Steuerelement 28 kann über den Steuerausgang 26 eine Steuerspannung am Gate 24 induzieren. Bei induzierter Steuerspannung wird der MOSFET 22 leitend. Über das Anlegen der Steuerspannung am Gate 24 kann ein Stromfluss durch das LED-Leuchtmittel 4 eingeschalten werden. Das Ausschalten oder Unterbrechen des Stromflusses erfolgt durch das Steuerelement 28 durch Abschalten der Steuerspannung am Gate 24. Der Stromfluss durch den Dimmer 2 wird also durch das Steuerelement 28 ein- und ausgeschaltet. Insbesondere ist ein Stromfluss nur möglich, wenn eine Steuerspannung am Gate 24 des MOSFETs 22 anliegt. Durch die Schaltung des Stromflusses durch den Dimmer 2 wird auch die von der Anschlussleitung 18 abgegriffene Spannung und Ausgangsleistung variiert.

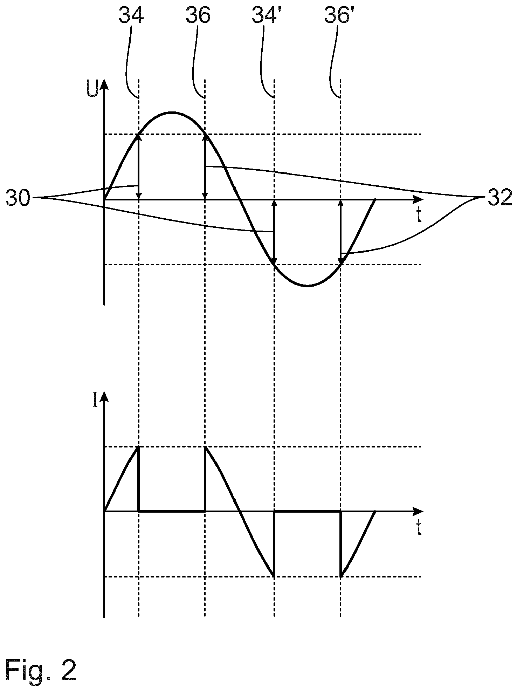

Im Folgenden sollen anhand der Fig. 2 das Verfahren zum Schalten des Dimmers beschrieben werden. In Fig. 2 ist hierzu der zeitliche Ablauf einer Periode der angelegten Wechselspannung U dargestellt. Hierzu ist der Verlauf der Wechselspannung U entlang der Zeitachse t aufgetragen. Des Weiteren ist in Fig. 2 ein durch den Dimmer 2 fließender Strom I über die Zeitachse t aufgetragen, wenn eine ohmsche Last angeschlossen ist. Bei Anschluss eines LED-Leuchtmittels 4 ist der Stromfluss ungefähr proportional zur Ableitung der Spannung nach der Zeit.

Die Wechselspannung U verläuft über die Zeit t sinusförmig. Dies bedeutet, dass sie am Anfang der dargestellten Periode, zur Hälfte der dargestellten Periode und am Ende der dargestellten Periode jeweils einen Nulldurchgang durchläuft. Nach dem Durchlaufen des ersten Nulldurchgangs zum Anfang der Periode steigt die Wechselspannung U und damit ihr Betrag an. Da zu diesem Zeitpunkt das Steuerelement 28 eine Steuerspannung am Gate 24 des MOSFETs 22 anlegt, fließt auch der Strom I, welcher ungefähr proportional ist zur Ableitung der Wechselspannung U nach der Zeit. Wenn der Betrag der Wechselspannung U eine Ausschalt-Sollspannung 30 überschreitet, schaltet das Steuerelement 28 die Steuerspannung am Gate 24 ab und der MOSFET 22 sperrt den Stromfluss. Der Strom I fällt schlagartig auf 0 ab. Nach Durchlaufen des Maximums der Wechselspannung U nimmt diese ab. Sobald der Betrag der Wechselspannung U eine Einschalt-Sollspannung 32 unterschreitet, legt das Steuerelement 28 eine Steuerspannung am Gate 24 an und aktiviert den MOSFET 22. Der Strom I setzt sprunghaft wieder ein.

Wenn der MOSFET 22 gesperrt ist, ist der Stromfluss I unterbrochen.

Zum Erzielen der oben beschriebenen Vorteile des Verfahrens ist es notwendig, dass die Ausschalt-Sollspannung 30 und die Einschalt-Sollspannung 32 als positiv definiert sind. Die Einschalt-Sollspannung 32 darf weiterhin höchstens so groß sein wie die Ausschalt-Sollspannung 30. Im hier gezeigten Beispiel ist die Einschalt-Sollspannung 32 im Wesentlichen gleich der Ausschalt-Sollspannung 30. Dies bedeutet, dass die Einschalt-Sollspannung 32 mindestens 80 %, insbesondere mindestens 90 %, insbesondere mindestens 99 % der Ausschalt-Sollspannung beträgt. Die Differenz zwischen der Ausschalt-Sollspannung 30 und der Einschalt-Sollspannung 32 ist kleiner als zweimal die Spannung, welche am Glättungskondensator 14 abfällt. Hierdurch werden Spannungssprünge an den Kondensatoren 8, 14 des LED-Leuchtmittels 4 verhindert. Störende Stromimpulse an den Kondensatoren 8, 14 werden vermieden.

Durch das Aus- und Einschalten wird der Stromfluss I zeitlich unterbrochen. Er wird insbesondere in den Bereichen des maximalen Betrags der Wechselspannung U unterbrochen. Hierdurch werden der mittlere Stromfluss und damit die an der Anschlussleitung 18 abgegriffene Ausgangsleistung vermindert. Für den Fall, dass Ausschalt-Sollspannung 30 und Einschalt-Sollspannung 32 sich im Wesentlichen entsprechen, sind der mittlere Stromfluss wie auch die an LED-Leuchtmittel angelegte Ausgangsleistung ungefähr proportional zu der Ausschalt-Sollspannung 30 bzw. der Einschalt-Sollspannung 32. Die vom LED-Leuchtmittel 4 aufgenommene Leistung kann somit durch Festlegen der Ausschalt-Sollspannung 30 und der Einschalt-Sollspannung 32 stufenlos gesteuert werden. Hierdurch ist es möglich, die Helligkeit des LED-Leuchtmittels 4 in einem Helligkeitsbereich von 0 % bis 100 % der maximalen Helligkeit des LED-Leuchtmittels 4 zu steuern.

Da der zeitliche Verlauf der Wechselspannung U vorgegeben ist, kann dem Überschreiten der Ausschalt-Sollspannung 30 ein Ausschalt-Zeitpunkt 34 zugeordnet werden. Dem Einschalten beim Unterschreiten der Einschalt-Sollspannung 32 kann ein Einschalt-Zeitpunkt 36 zugeordnet werden. In dem Zeitintervall von dem Ausschalt-Zeitpunkt 34 bis zu dem Einschalt-Zeitpunkt 36 beträgt der Stromfluss I gleich Null.

Nach dem Wiedereinschalten des Stromflusses am Einschalt-Zeitpunkt 36 verringert sich der Betrag der Wechselspannung U bis die Wechselspannung U einen Nulldurchgang durchläuft. Da der Betrag der Wechselspannung U unabhängig vom Vorzeichen der Wechselspannung U ist, werden die Schaltprozesse auch bei umgekehrter Polung äquivalent ausgeführt. Das Ausschalten des Stromflusses I erfolgt hierbei zu einem Ausschalt-Zeitpunkt 34', das Wiedereinschalten des Stromflusses I erfolgt zu einem Einschalt-Zeitpunkt 36'.

Aufgrund des periodischen Verlaufs der Wechselspannung U korrelieren die Ausschalt-Zeitpunkte 36, 36' und die Einschalt-Zeitpunkte 34, 34' mit der doppelten Frequenz der Wechselspannung U. Der periodische zeitliche Verlauf der Wechselspannung U erlaubt hierbei, die Schaltprozesse anstatt durch die Sollspannungen 30, 32 durch die Schaltzeitpunkte 34, 34', 36, 36' zu definieren. Das Steuerelement 28 kann also auch als mit der Periodizität der Wechselspannung U korrelierter Timer ausgeführt sein, der die Schaltzeitpunkte 34, 36, 34', 36' durch den zeitlichen Verlauf der Steuerspannung vorgibt.

Es können auch andere Verschaltungen für den Dimmer verwendet werden. Das hier gezeigte Ausführungsbeispiel hat den Vorteil einer einfachen und stabilen Bauweise.

Wesentlich für den Dimmer ist, dass ein Schaltelement 22 vorgesehen ist, mit welchem der Stromfluss ein- und ausgeschaltet werden kann, und dass ein Steuerelement 28 vorgesehen ist, das das Schaltelement 22 ansteuert. Das Steuerelement gleicht hierzu den Betrag der angelegten Wechselspannung mit einer Ausschalt-Sollspannung 30 und/oder einer Einschalt-Sollspannung 32 ab. Zur Einstellung dieser Sollspannungen ist es vorteilhaft, wenn das Steuerelement ein Potentiometer aufweist, mit dem die Sollspannungen eingestellt werden können.

Alternativ zu dem normalsperrenden MOSFET 22 kann auch ein normalleitender MOSFET vorgesehen sein. Dies bedeutet, dass der Strom I in Abwesenheit einer Steuerspannung am Steuerausgang 26 des Steuerelements 28 fließt. Der Strom I wird dann durch Anlegen der Steuerspannung ausgeschaltet.

In einem nicht dargestellten Ausführungsbeispiel sind mehrere parallel geschaltete LED-Leuchtmittel, wovon jedes einen eingangsseitigen Koppelkondensator umfasst, an den Dimmer angeschlossen.

## Patentansprüche

1. Verfahren zur Steuerung einer Ausgangsleistung einer elektrischen Wechselspannung, umfassend die folgenden Schritte
- Ausschalten eines durch die Wechselspannung induzierten Stromflusses sobald ein Betrag der Wechselspannung eine Ausschalt-Sollspannung (30) überschreitet,
- Einschalten des Stromflusses sobald der Betrag der Wechselspannung eine Einschalt-Sollspannung (32) unterschreitet,
**dadurch gekennzeichnet, dass**
- die Ausschalt-Sollspannung (30) und die Einschalt-Sollspannung (32) positiv sind,
- die Einschalt-Sollspannung (32) kleiner oder gleich die Ausschalt-Sollspannung (30) ist,
- die Ausgangsleistung als eine Eingangsleistung an mindestens einem LED-Leuchtmittel (4) anliegt, und
- eine Helligkeit des LED-Leuchtmittels (4) in einem Helligkeitsbereich von 0 % bis 100 % einer maximalen Helligkeit des LED-Leuchtmittels (4) steuerbar ist.

2. Verfahren nach Anspruch 1, **dadurch gekennzeichnet, dass** die Einschalt-Sollspannung (32) im Wesentlichen gleich der Ausschalt-Sollspannung (30) ist.

3. Verfahren nach einem der vorgenannten Ansprüche, **dadurch gekennzeichnet, dass** die Einschalt-Sollspannung (32) und/oder die Ausschalt-Sollspannung (30) veränderlich festlegbar sind.

4. Dimmer für eine elektrische Wechselspannung, umfassend
- ein Schaltelement (22) zum Einschalten und Ausschalten eines durch die Wechselspannung induzierten Stromflusses,
- ein mit dem Schaltelement (22) verbundenes Steuerelement (28) zur Erzeugung einer Steuerspannung,
**dadurch gekennzeichnet, dass** das Steuergerät (28) das Schaltelement (22) derart ansteuert, dass eine Ausgangsleistung gemäß dem Verfahren nach einem der Ansprüche 1 bis 3 gewährleistet ist.

5. Dimmer nach Anspruch 4, **dadurch gekennzeichnet, dass** ein Gleichrichter (20) vorgesehen ist und das Schaltelement (20) als Transistor ausgeführt ist.

6. Dimmer nach einem der Ansprüche 4 oder 5, **dadurch gekennzeichnet, dass** das Steuerelement (28) ein Potentiometer aufweist.

7. Anordnung mit einem Dimmer (2) nach einem der Ansprüche 4 bis 6 und mindestens einem Leuchtmittel (4), das mindesten ein LED-Element (16) aufweist.
